# EUROPÄISCHE PATENTSCHRIFT

(11) **EP 3 561 292 B1**
(45) Veröffentlichungstag und Bekanntmachung des Hinweises auf die Patenterteilung: **18.01.2023**
(21) Anmeldenummer: 18169271.6
(22) Anmeldetag: 25.04.2018
(51) Int. Cl.: F03D 1/06

(54) **BEFESTIGUNGSSCHRAUBBOLZEN FÜR DIE HERSTELLUNG EINES FLANSCHANSCHLUSSES EINES WINDENERGIEANLAGENROTORBLATTS, SYSTEM, VERFAHREN, FLANSCHEINLEGER, ROTORBLATT SOWIE WINDENERGIEANLAGE**
FIXING BOLTS FOR THE MANUFACTURE OF A WIND TURBINE ROTOR BLADE FLANGE CONNECTION, SYSTEM, METHOD, FLANGE INSERTER, ROTOR BLADE AND WIND TURBINE
BOULONS FILETÉS DE FIXATION POUR LA PRODUCTION D'UN RACCORD À BRIDE D'UNE PALE DE ROTOR D'UNE ÉOLIENNE, SYSTÈME, PROCÉDÉ, INSERT À BRIDE, PALE DE ROTOR AINSI QU'ÉOLIENNE

(43) Veröffentlichungstag der Anmeldung: 30.10.2019
(73) Patentinhaber: Nordex Energy SE & Co. KG, 22419 Hamburg (DE); Nordex Blade Technology Centre ApS, 5771 Stenstrup (DK)
(72) Erfinder: Werner, Markus, 24242 Felde (DE); Hornemann, Jesper, 5792 Aarslev (DK)
(74) Vertreter: Epping - Hermann - Fischer

(56) Entgegenhaltungen:
- WO-A1-2015/124568
- DE-A1-102008 021 498
- US-A1- 2014 234 109

## Beschreibung

Die Erfindung betrifft die Verwendung eines Befestigungsschraubbolzens für die Herstellung eines Flanschanschlusses eines Windenergieanlagenrotorblatts. Darüber hinaus betrifft die Erfindung ein System zur Fertigung eines Flanschanschlusses, ein Verfahren zum Herstellen eines Flanschanschlusses, einen Flanscheinleger mit einem Flanschanschluss, ein Windenergieanlagenrotorblatt sowie eine Windenergieanlage. Windenergieanlagen mit Rotorblättern sind aus dem Stand der Technik vielfach bekannt und werden verwendet, um Windenergie in elektrische Energie umzuwandeln. Im Bereich einer Rotorblattwurzel weisen die Rotorblätter einen Rotorblattanschluss mit einer Vielzahl von in das Laminat integrierten Hülsen auf, über welche die Rotorblätter mittels Befestigungsschrauben bzw. Befestigungsschraubbolzen mit einem Lagerring eines sogenannten Pitchlagers oder mit einem mit dem Lagerring verbundenen Bauteil wie z.B. einem Extender der Windenergieanlage verbunden werden. Die Hülsen können Teil eines Flanscheinlegers für den Rotorblattanschluss sein. Ein derartiger Aufbau ist beispielsweise aus der internationalen Anmeldung WO 2015/124568 A1 bekannt.

Alternativ finden Hülsen auch bei der Verbindung von Rotorblattsegmenten Verwendung, die, der Länge nach angeordnet und zusammengefügt, ein Rotorblatt bilden. Die Hülsen befinden sich dann im Laminat eines Teilungsflansches der Rotorblattsegmente. Die Rotorblattsegmente werden über die Hülsen mittels Schraubbolzen direkt oder über geeignete Zwischenstücke miteinander verbunden.

Eine Aufgabe, die der Erfindung zugrunde liegt, ist es, ein Konzept für Befestigungsschraubbolzen anzugeben, welches zu einem besonders verlässlichen Betrieb einer Windenergieanlage beiträgt.

Gemäß einem ersten Aspekt wird ein Befestigungsschraubbolzen für die Herstellung eines Flanschanschlusses eines Windenergieanlagenrotorblatts offenbart. Der Befestigungsschraubbolzen ist ausgebildet, mittels eines Außengewindes in eine Hülse des Flanschanschlusses eingeschraubt zu werden. Der Befestigungsschraubbolzen ist dadurch gekennzeichnet, dass das Außengewinde ein derartiges Gleitmaterial aufweist, so dass beim Eingriff des Außengewindes in ein Innengewinde der Hülse, welches einen Stahlwerkstoff aufweist, Notlaufeigenschaften gewährleistet sind.

Wie eingangs erwähnt, weisen Flanschanschlüsse bei Rotorblättern eine Vielzahl von nebeneinander angeordneten Hülsen auf. Dient der Flanschanschluss als Rotorblattanschluss sind die Hülsen in der Regel kreisförmig angeordnet. Dient der Flanschanschluss zur Verbindung von Rotorblattsegmenten können die Hülsen nebeneinander entsprechend dem aerodynamischen Profil des Rotorblattes an der Teilungsstelle angeordnet sein. Die Hülsen sind in einen Faserverbundwerkstoff, beispielsweise glasfaserverstärkten Kunststoff, eingebettet und mittels Infusionstechnologie mit dem Faserverbundwerkstoff verbunden. Für diesen Fertigungsprozess müssen die Hülsen positioniert und ausgerichtet werden. Hierzu werden die Hülsen mithilfe von Befestigungsschraubbolzen gegen einen Formenflansch einer Fertigungsform gezogen. Anschließend kann der Faserverbundwerkstoff, beispielsweise ein oder mehrere Laminatlagen, in die Fertigungsform eingelegt und mit den Hülsen verbunden werden. Nach der Fertigstellung des Flanschanschlusses werden die Befestigungsschraubbolzen wieder entfernt. Der Flanschanschluss ist beispielsweise als separater Flanscheinleger für ein Rotorblatt ausgebildet oder wird entsprechend dem obigen Verfahren direkt bei der Fertigung des Rotorblatts hergestellt.

Der Gedanke der Erfindung liegt in der Wahl eines speziellen Materials für die Befestigungsschraubbolzen und somit der Ausbildung einer speziellen Materialpaarung zwischen dem Innengewinde der Hülse und dem Gewinde des Befestigungsschraubbolzens bei der Herstellung des Flanschanschlusses. Dadurch ist ein Befestigungsschraubbolzen gegeben, der auch trocken und somit ohne Schmierung, etwa ohne Fett, nicht zum "Fressen" mit der Hülse im verschraubten Zustand neigt.

Es wurde erkannt, dass bei der Fertigung des Flanschanschlusses die Hülsen aufgrund der Komprimierung des Faserverbundwerkstoffes, in welchen die Hülsen eingebettet sind, geringfügig verkippen. Weiterhin wurde erkannt, dass bei der Verwendung von handelsüblichen, in der Regel aus Stahlwerkstoff bestehenden Schrauben bzw. Schraubbolzen, schon ein geringes Verkanten der Schraubbolzen ausreicht, um zum sogenannten "Fressen" zu führen. Unter dem Begriff "Fressen" ist eine chemisch/physikalische Verbindung zwischen dem Gewinde des Schraubbolzens und dem Gewinde der Hülse gemeint, die dazu führt, dass der Schraubbolzen nicht mehr oder zumindest nicht ohne erheblichen zerstörerischen Aufwand demontiert werden kann. Durch den Einsatz von Fett oder anderen Schmiermaterialien im Gewindebereich der Hülsen kann das "Fressen" der Hülsen mit den Schraubbolzen während der Fertigung des Flanschanschlusses vermieden werden. Allerdings müssen die Hülsen dann nach der Entnahme des Flanschanschlusses aus der Fertigungsform aufwändig von innen gereinigt werden. Reste von Schmiermaterial im Gewinde der Hülsen wären nachteilig für eine spätere Verwendung des gesamten, gefertigten Rotorblattes. Durch die Reste von Schmiermaterial wird die Reibung herabgesetzt und es besteht die Gefahr, dass sich die Verschraubung der Windenergieanlagenrotorblatts im betriebsgemäßen Zustand löst.

Diese Nachteile werden durch die oben beschriebene Materialpaarung vermieden. Die Erfindung trägt somit unter anderem dazu bei, dass hohe Reibwerte zwischen den im Betrieb eingesetzten Rotorblattschraubbolzen und den Hülsen in einem betriebsgemäßen Zustand der Windenergieanlage sichergestellt sind. Ein Lösen der Rotorblattschraubbolzen im Betrieb aufgrund von Fettrückständen wird vermieden. Bei der endgültigen Befestigung des Rotorblattes an der Windenergieanlage oder bei der Verbindung von zwei Blattsegmenten zu einem Windenergieanlagenrotorblatt können hochfeste Stahlbolzen, ohne Gleitmaterial mit Notlaufeigenschaften, verwendet werden. Im endgültig montierten Zustand ist ein "Fressen" in der Regel ausgeschlossen, weil kein Verkippen mehr auftritt.

Die Erfindung ermöglicht somit zudem ein erhebliches Kosteneinsparpotential bei der Fertigung von Rotorblättern, da es nicht notwendig ist, Fett oder andere Schmiermaterialien aufgrund der oben beschriebenen Gefahr aufwändig, beispielsweise mittels drehender Drahtbürsten zu entfernen. Zudem ist bei einem solchen Entfernen von Rückständen nicht sichergestellt, ob auch wirklich jegliche Schmierungsreste aus der Hülse entfernt werden.

Es wurde weiter erkannt, dass das Vorsehen eines ausreichenden Härteunterschieds (beispielsweise größer als 50 HV) der bei der Verschraubung beteiligten Materialien von Hülse und Befestigungsschraubbolzen bei dem beschriebenen Einsatzzweck zum Verhindern des Festfressens alleine nicht ausreichen würde. Durch das Vorsehen des speziellen Gleitmaterials am Außengewinde des Befestigungsschraubbolzens in Verbindung mit dem Stahlgewinde der Hülse werden die oben genannten Vorteile und Funktionen ermöglicht, sogar unabhängig davon, ob ein solcher Härteunterschied gegeben ist.

Der Begriff Notlaufeigenschaften bedeutet hier und im Folgenden, dass der Befestigungsschraubbolzen und die Hülse ohne Schmierung aufeinander abgleiten können. Insbesondere ist das Gleitmaterial des Befestigungsschraubbolzens so gewählt, dass für die Fertigung eines Flanschanschlusses und des Rotorblattes insgesamt im Wesentlichen kein "Fressen" auftreten kann.

Das Aufweisen des Gleitmaterials bedeutet, dass zumindest eine Gewindekontaktfläche des Befestigungsschraubbolzens das Gleitmaterial aufweist oder aus diesem besteht. Der Befestigungsschraubbolzen kann auch als Befestigungsbolzen oder Schraubbolzen bezeichnet werden.

Gemäß einer Ausführungsform ist der Befestigungsschraubbolzen einstückig hergestellt und besteht aus dem Gleitmaterial. Ein solcher Befestigungsschraubbolzen ist einfach in der Herstellung. Beispielsweise handelt es sich um einen Bronze-Befestigungsschraubbolzen.

Gemäß einer Ausführungsform ist das Gleitmaterial als Beschichtung auf das Außengewinde des Befestigungsschraubbolzens aufgebracht. Die Beschichtung ist fest mit dem Außengewinde verbunden und löst sich während des Ein- bzw. Ausschraubens des Bolzens nicht vom Außengewinde ab. Dadurch ist der Befestigungsschraubbolzen besonders kostengünstig herstellbar. Auch kann eine Festigkeit im Vergleich zu einem einstückig aus Gleitmaterial hergestellten Befestigungsschraubbolzen erhöht sein, da beispielsweise als Grundmaterial des Befestigungsschraubbolzens ein besonders hartes Material wie Stahl verwendet werden kann. Als Beschichtung eignet sich beispielsweise PTFE.

Gemäß einer Ausführungsform ist das Gleitmaterial als ein Festschmierstoff ausgebildet und in eine Kontaktoberfläche des Außengewindes eingelagert. Auch dies ermöglicht die oben genannten Vorteile und Funktion hinsichtlich Festigkeit des Schraubbolzens insgesamt und der Kostengünstigkeit in der Herstellung. Bei Festschmierstoffen ist beispielsweise an Molybdändisulfid MoS₂ oder Graphit zu denken.

Gemäß einer bevorzugten Ausführungsform ist der Befestigungsschraubbolzen durch einen Hauptbolzen und eine Gewindehülse gebildet, wobei die Gewindehülse das Außengewinde mit dem Gleitmaterial aufweist und mit dem Hauptbolzen fest verbunden ist. Es handelt sich somit um einen zumindest zweiteiligen Bolzen. Beispielsweise ist die Gewindehülse mit dem Hauptbolzen über ein Linksgewinde fest verbunden. Zusätzlich oder alternativ ist die Gewindehülse mit dem Hauptbolzen verlötet, beispielsweise kaltverlötet. Alternative Fügeverfahren wie Kleben sind ebenfalls denkbar.

Auch bei einer derartigen Lösung wird eine kostengünstige Herstellung im Vergleich zu einem einstückigen aus Gleitmaterial bestehenden Schraubbolzen ermöglicht. Außerdem kann die Festigkeit im Vergleich zu einem solchen einstückig hergestellten Schraubbolzen deutlich erhöht sein. Beispielsweise ist der Hauptbolzen ein Stahlbolzen mit hoher Festigkeit und die Gewindehülse eine Bronzegewindehülse.

Neben den bereits erwähnten Gleitmaterialwerkstoffen kann das Gleitmaterial auch aus einem Rotgusswerkstoff, Polytherfluorethylen (PTFE) oder anderen bestehen.

Gemäß einem weiteren Aspekt wird ein System zur Fertigung eines Flanschanschlusses eines Windenergieanlagenrotorblatts offenbart. Das System weist eine Fertigungsform mit einem Formenflansch mit mehreren nebeneinander angeordneten Bohrungen auf. Weiter weist das System mehrere Befestigungsschraubbolzen gemäß dem zuvor beschriebenen Aspekt auf. Weiterhin weist das System mehrere Hülsen für den Flanschanschluss auf. Die Befestigungsschrauben sind durch die Bohrungen hindurchführbar und in die Hülsen einschraubbar, so dass die Hülsen gegen den Formenflansch verschraubbar sind.

Der Formenflansch dient der Herstellung des Flanschanschlusses. Mittels des Formenflansches können die Hülsen nebeneinander angeordnet und positioniert werden, indem sie mittels der Befestigungsschraubbolzen fest mit dem Formenflansch verschraubt werden.

Das System ermöglicht somit die zuvor erwähnte Herstellung des Flanschanschlusses und trägt zu den oben genannten Vorteilen und Funktionen bei.

Gemäß einem weiteren Aspekt wird ein Verfahren zum Herstellen eines Flanschanschlusses eines Windenergieanlagenrotorblatts beschrieben. Das Verfahren hat die folgenden Schritte:
- Durchführen von Befestigungsschraubbolzen nach dem zuvor beschriebenen Aspekt durch nebeneinander angeordnete Bohrungen eines Formenflansches einer Fertigungsform;
- Einschrauben der Befestigungsschraubbolzen in die Hülsen derart, dass die Hülsen mit dem Formenflansch verschraubt sind; und
- Fertigen des Flanschanschlusses, wobei die Hülsen in einen Faserverbundwerkstoff eingebettet werden.

Gemäß einem weiteren Aspekt wird ein Verfahren zum Herstellen eines Flanschanschlusses eines Windenergieanlagenrotorblatts offenbart. Das Verfahren hat die folgenden Schritte:
- Durchführen von Befestigungsschraubbolzen nach dem zuvor beschriebenen Aspekt durch nebeneinander angeordnete Bohrungen eines Formenflansches einer Fertigungsform;
- Einschrauben der Befestigungsschraubbolzen in die Hülsen derart, dass die Hülsen mit dem Formenflansch verschraubt sind;
- Fertigen eines Flanscheinlegers mit dem Flanschanschluss, wobei die Hülsen in einen Faserverbundwerkstoff des Flanscheinlegers eingebettet werden.

Die beiden Verfahren ermöglichen die vorgenannten Vorteile und Funktionen mit Bezug auf die Befestigungsschraubbolzen. Der Schritt Fertigen umfasst sämtliche Schritte, die zum Herstellen des Flanscheinlegers bzw. Flanschanschlusses nötig sind, etwa Einlegen in Formen, Einbringen und Aushärten von Faserverbundwerkstoffen und dergleichen.

Gemäß einem weiteren Aspekt wird ein Flanscheinleger mit einem Flanschanschluss für ein Windenergieanlagenrotorblatt offenbart. Der Flanscheinleger weist mehrere nebeneinander angeordnete Hülsen auf, die in einem Faserverbundwerkstoff eingebettet sind. Der Flanscheinleger ist gemäß dem oben genannten Verfahren hergestellt.

Gemäß einem weiteren Aspekt wird ein Windenergieanlagenrotorblatt offenbart, welches einen Flanschanschluss mit mehreren, nebeneinander angeordneten Hülsen aufweist. Der Flanschanschluss ist gemäß einem der oben genannten Verfahren hergestellt.

Gemäß einem weiteren Aspekt wird eine Windenergieanlage offenbart, welche einen Rotor mit einem oder mehreren Rotorblättern gemäß dem obigen Aspekt aufweist.

Der Flanscheinleger, das Rotorblatt sowie die Windenergieanlage ermöglichen die vorgenannten Vorteile und Funktionen.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen.

In den Figuren zeigen:
Figur 1 eine schematische Darstellung einer Windenergieanlage gemäß einem Ausführungsbeispiel,
Figur 2 eine schematische Darstellung eines Rotorblatts der Windenergieanlage,
Figur 3 eine schematische Darstellung eines Flanscheinlegers für das Rotorblatt,
Figur 4 eine perspektivische, schematische Darstellung eines Befestigungsbolzens gemäß einem Ausführungsbeispiel der Erfindung,
Figur 5 eine schematische Querschnittsansicht des Befestigungsbolzens,
Figur 6 eine schematische Querschnittsansicht eines Systems zur Fertigung eines Flanschanschlusses und
Figur 7 ein schematisches Ablaufdiagramm eines Verfahrens zum Herstellen eines Flanschanschlusses.

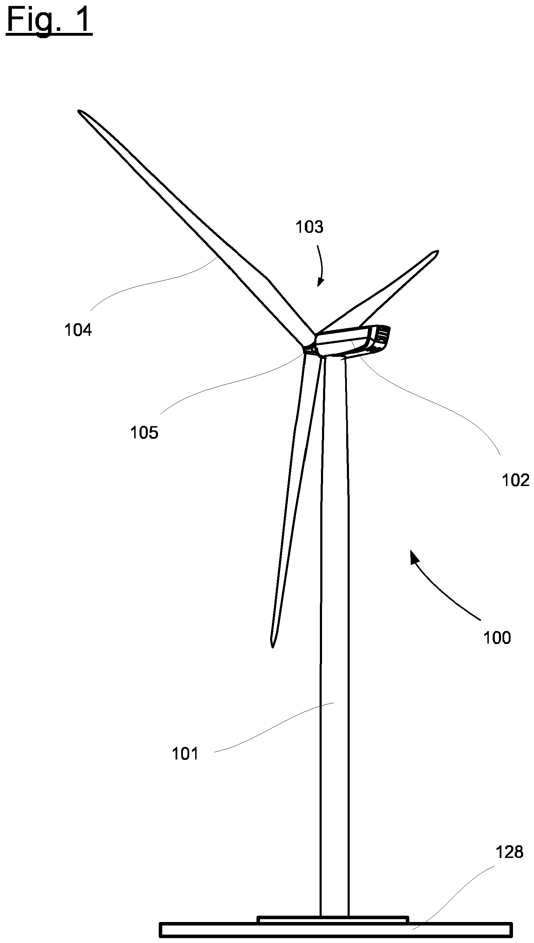

Figur 1 zeigt eine schematische Darstellung einer Windenergieanlage 100. Die Windenergieanlage 100 weist einen Turm 101 auf. Der Turm 101 ist mittels eines Fundaments 128 auf einem Untergrund befestigt. An einem dem Untergrund gegenüberliegenden Ende des Turms 101 ist eine Gondel 102 drehbar gelagert. Die Gondel 102 weist beispielsweise einen Generator auf, der über eine Rotorwelle (nicht gezeigt) mit einem Rotor 103 gekoppelt ist. Der Rotor 103 weist ein oder mehrere Rotorblätter 104 auf, die an einer Rotornabe 105 angeordnet sind.

Der Rotor 103 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 103 in elektrische Energie um.

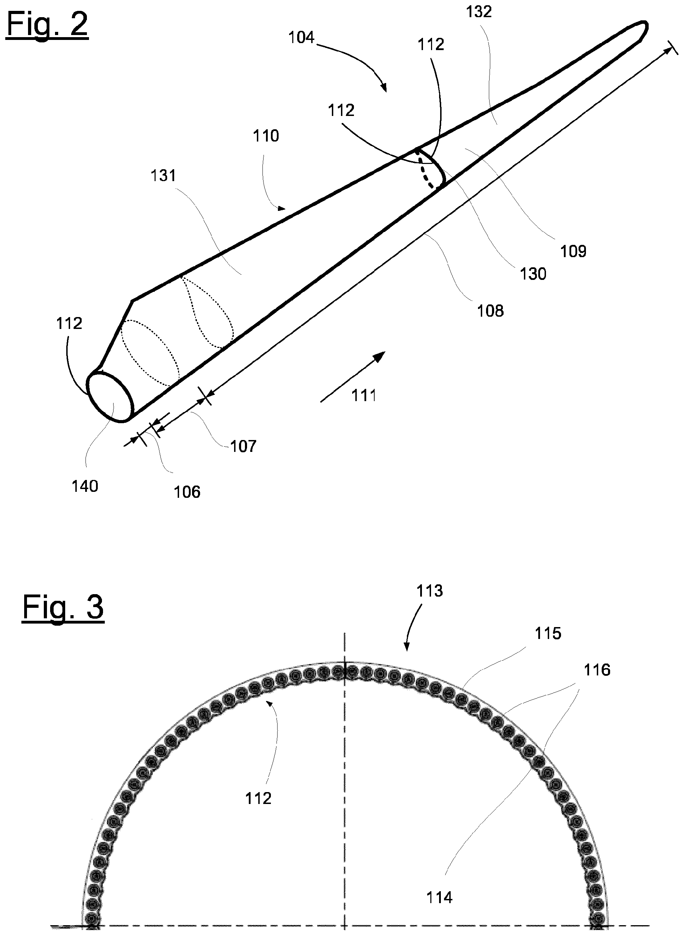

Figur 2 zeigt ein exemplarisches Windenergieanlagenrotorblatt 104. Das Rotorblatt 104 hat die Form eines herkömmlichen Rotorblattes und hat einen Rotorblattwurzelbereich 106, der der Rotornabe 105 zugewandt ist. Der Rotorblattwurzelbereich 106 hat typischerweise einen im Wesentlichen kreisrunden Querschnitt. An den Rotorblattwurzelbereich 106 schließen sich ein Übergangsbereich 107 und ein Profilbereich 108 des Rotorblatts 104 an. Das Rotorblatt 104 hat bezüglich einer Längserstreckungsrichtung 111 eine Druckseite 109 und eine gegenüberliegende Saugseite 110. Das Rotorblatt 104 ist im Inneren im Wesentlichen hohl ausgebildet.

Im Rotorblattwurzelbereich 106 ist ein Rotorblattanschluss 140 mit einem Flanschanschluss 112 vorgesehen, mittels welchem das Rotorblatt 104 mit einem Pitchlager oder einem Extender mechanisch verbunden wird.

Das Rotorblatt 104 weist eine Teilungsstelle 130 auf, an welcher ein blattwurzelseitiges Rotorblattsegment 131 und ein blattspitzenseitiges Rotorblattsegment 132 über Teilungsflansche miteinander verbunden sind, wobei zumindest ein Teilungsflansch einen Flanschanschluss 112 aufweist.

Zur Herstellung des Flanschanschlusses 112 für den Rotorblattanschluss 140 ist beispielsweise ein Flanscheinleger 113 vorgesehen (s. Figur 3). Dabei handelt es sich um ein kreisbogeninnen und -außenseitiges Laminat 114 und 115, in welches in Längserstreckungsrichtung 111 Hülsen 116 mit einem Innengewinde eingebettet sind. Bei den Hülsen 116 handelt es sich beispielsweise um Stahlhülsen. Insbesondere weisen die Innengewinde somit Stahl auf. Ein halbkreisförmiges Segment ist in Figur 3 gezeigt. Der Flanscheinleger 113 weist somit den Flanschanschluss 112 auf.

Es ist jedoch auch denkbar, dass kein Flanscheinleger 113 vorgesehen ist und die Hülsen 116 direkt in das Rotorblatt 104, etwa in Rotorblatthalbschalen, eingebettet und laminiert werden und den Flanschanschluss 112 bilden.

In jedem Fall müssen die Hülsen 116 für den Herstellungsprozess des Flanschanschlusses 112 an einer Fertigungsform positioniert und ausgerichtet werden. Hierzu werden die Hülsen 116 mit Hilfe von Befestigungsschraubbolzen mit einem Formenflansch verschraubt. Der Formenflansch kann integral mit der Fertigungsform gefertigt oder lösbar an der Fertigungsform befestigt sein und kann auch als Fixierflansch bezeichnet werden.

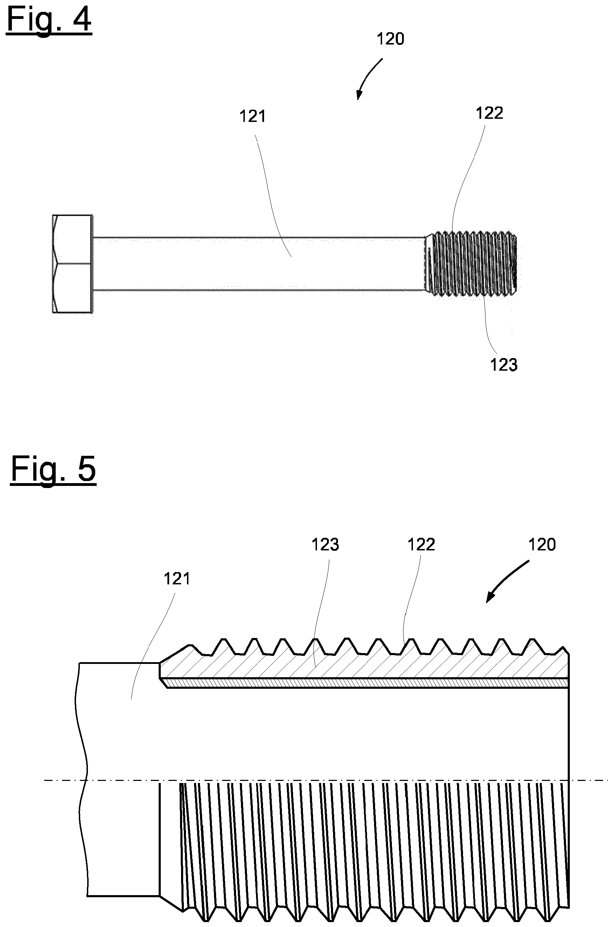

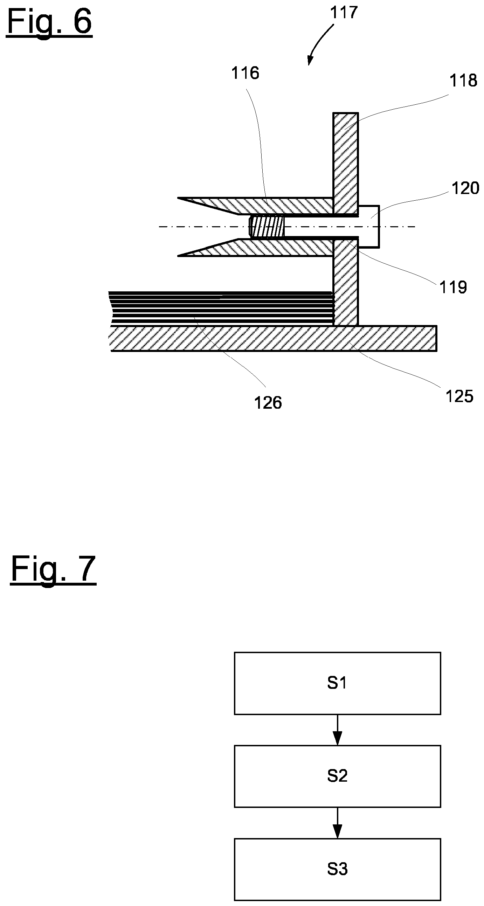

Exemplarisch wird die Fertigung eines Flanscheinlegers 113 anhand des in Figur 7 schematisch gezeigten Ablaufdiagramms mit Hilfe der weiteren Figuren 4 bis 6 beschrieben.

Zur Herstellung wird ein in Figur 6 dargestelltes System 117 verwendet, welches eine Fertigungsform 125 mit einem Formenflansch 118 mit mehreren kreisförmig nebeneinander angeordneten Bohrungen 119 aufweist.

In einem ersten Schritt S1 wird durch jede Bohrung 119 ein Befestigungsschraubbolzen 120 gemäß Figuren 4 und 5 hindurchgeführt.

Jeder Befestigungsbolzen 120 besteht aus einem Hauptbolzen 121, der aus einem Stahlwerkstoff und somit besonders fest ausgebildet ist. An einem Ende weist der Befestigungsbolzen 120 ein Außengewinde 122 auf, welches ein Gleitmaterial aufweist, das beim Eingriff in ein entsprechendes Innengewinde der Hülse 116 Notlaufeigenschaften gewährt. Im Ausführungsbeispiel ist eine Gewindehülse 123 mittels eines Linksgewindes (nicht dargestellt) auf dem Hauptbolzen 121 aufgeschraubt und kalt mit diesem verlötet. Die Hülse 123 und damit das Außengewinde 122 sind aus Bronze gefertigt. Anschließend werden in einem nächsten Schritt S2 die Befestigungsschraubbolzen 120 jeweils in eine Hülse 116 derart eingeschraubt, dass die Hülsen 116 fest mit der Flanschvorrichtung 118 verschraubt sind.

In einem nachfolgenden Schritt S3 wird der Flanscheinleger 113 und somit der Flanschanschluss 112 gefertigt, wobei die Hülsen 116 in einen Faserverbundwerkstoff 126 eingebettet und mit diesem fest verbunden werden. Beispielsweise werden die Hülsen 116 zwischen Laminate 114 und 115 aus glasfaserverstärktem Kunststoff gebracht und mittels Infusionstechnologie verbunden. Dabei wird der Aufbau, insbesondere die Laminate 114 und 115 komprimiert, wodurch es zu dem eingangs erwähnten leichten Verkippen der Hülsen 116 bezüglich des Formflansches bzw. der Befestigungsschraubbolzen 120 kommen kann.

Nach der Herstellung des Flanscheinlegers 113 werden die Schraubbolzen 120 wieder aus den Hülsen 116 herausgeschraubt, so dass der Flanscheinleger 113 der Fertigungsform 125 entnommen und in eine weitere Form, insbesondere in eine Rotorblatthauptform, zur Fertigung des endgültigen Rotorblattes eingelegt werden kann.

Aufgrund der Ausgestaltung der Befestigungsschraubbolzen 120 mit Außengewinde aus Gleitmaterial werden die eingangs genannten Vorteile und Funktionen erreicht. Insbesondere ist es nicht notwendig, wie eingangs erwähnt Fett oder andere Schmiermittel bei der Verbindung des Befestigungsschraubbolzens 120 mit der Hülse 116 in dem System 117 für die Fertigung eines Rotorblattes beziehungsweise Flanschanschlusses 112 vorzusehen.

In nicht gezeigten Ausführungsbeispielen kann der gesamte Befestigungsbolzen 120 auch einstückig gefertigt und aus Bronze herstellt sein. Auch ist ein Befestigungsbolzen 120 denkbar, bei dem Festschmierstoffe wie Molybdändisulfid oder Graphit in eine Außengewindekontaktoberfläche eingebracht sind.

Wie oben erwähnt muss nicht zwingend ein Flanscheinleger 113 mit Hülsen 116 zur Bildung des Flanschanschlusses 112 gefertigt werden. Der Flanschanschluss 112 kann auch direkt bei der Fertigung des Rotorblattes 104 oder von Rotorblatthalbschalen bzw. von Rotorblattsegmenten, die zu dem Rotorblatt 104 zusammengesetzt und verbunden werden, mit einem entsprechenden Formenflansch 118 bzw. einem entsprechenden System 117 hergestellt werden. Die hilfsweise Positionierung der Hülsen 116 erfolgt analog mit den beschriebenen Befestigungsschraubbolzen 120.

### BEZUGSZEICHENLISTE

- 100: Windenergieanlage
- 101: Turm
- 102: Gondel
- 103: Rotor
- 104: Rotorblatt, Windenergieanlagenrotorblatt
- 105: Rotornabe
- 106: Rotorblattwurzelbereich
- 107: Übergangsbereich
- 108: Profilbereich
- 109: Druckseite
- 110: Saugseite
- 111: Längserstreckungsrichtung
- 112: Flanschanschluss
- 113: Flanscheinleger
- 114: Laminat
- 115: Laminat
- 116: Hülse
- 117: System
- 118: Formenflansch
- 119: Bohrung
- 120: Befestigungsschraubbolzen
- 121: Hauptbolzen
- 122: Außengewinde
- 123: Gewindehülse
- 125: Fertigungsform
- 126: Laminatlagen
- 128: Fundament
- 130: Teilungsstelle
- 131: blattwurzelseitiges Rotorblattsegment
- 132: blattspitzenseitiges Rotorblattsegment
- 140: Rotorblattanschluss
- S1 bis S3: Schritte

## Patentansprüche

1. Verwendung eines Befestigungsschraubbolzens (120) für die Herstellung eines Flanschanschlusses (112) eines Windenergieanlagenrotorblatts (104), wobei der Befestigungsschraubbolzen (120) mittels eines Außengewindes (122) in eine Hülse (116) des Flanschanschlusses (112) ohne Schmierung eingeschraubt wird, wobei das Außengewinde (122) ein derartiges Gleitmaterial aufweist, dass beim Eingriff in ein Innengewinde der Hülse (116), welches einen Stahlwerkstoff aufweist, Notlaufeigenschaften gewährleistet sind, wonach der Befestigungsschraubbolzen (120) und die Hülse (116) ohne Schmierung aufeinander abgleiten können.

2. Verwendung nach Anspruch 1, wobei der Befestigungsschraubbolzen (120) einstückig hergestellt ist und aus dem Gleitmaterial besteht.

3. Verwendung nach Anspruch 1, wobei das Gleitmaterial als feste Beschichtung auf das Außengewinde (122) des Befestigungsschraubbolzens (120) aufgebracht ist.

4. Verwendung nach Anspruch 1, wobei das Gleitmaterial ein Festschmierstoff und in eine Kontaktoberfläche des Außengewindes (122) eingelagert ist.

5. Verwendung nach Anspruch 1 oder 3 oder 4, wobei der Befestigungsschraubbolzen (120) durch einen Hauptbolzen (121) und eine Gewindehülse (123) gebildet ist, wobei die Gewindehülse (123) das Außengewinde (122) mit dem Gleitmaterial aufweist und mit dem Hauptbolzen (121) fest verbunden ist.

6. Verwendung nach Anspruch 4, wobei die Gewindehülse (123) und der Hauptbolzen (121) über ein Linksgewinde fest verbunden sind.

7. Verwendung nach Anspruch 4 oder 5, wobei die Gewindehülse (123) und der Hauptbolzen (121) durch Löten, insbesondere Kaltlöten, fest verbunden sind.

8. Verwendung nach einem der vorhergehenden Ansprüche, wobei das Gleitmaterial einen der folgenden Werkstoffe aufweist oder daraus besteht:
Bronzewerkstoff, Rotgusswerkstoff, PTFE, Molybdändisulfid oder Graphit.

9. System zur Fertigung eines Flanschanschlusses (112) eines Windenergieanlagenrotorblatts (104), aufweisend
eine Fertigungsform (125) mit einem Formenflansch (118) mit mehreren nebeneinander angeordneten Bohrungen (119);
mehrere Befestigungsschraubbolzen (120) verwendet nach einem der vorhergehenden Ansprüche; und
mehrere Hülsen (116); wobei die Befestigungsschraubbolzen (120) durch die Bohrungen (119) hindurchführbar und in die Hülsen (116) einschraubbar sind, so dass die Hülsen (116) mit dem Formenflansch (118) verschraubbar sind.

10. Verfahren zum Herstellen eines Flanschanschlusses (112) eines Windenergieanlagenrotorblatts (104), mit den Schritten:
Durchführen von Befestigungsschraubbolzen (120) verwendet nach einem der Ansprüche 1 bis 8 durch nebeneinander angeordnete Bohrungen (119) eines Formenflansches (118) einer Fertigungsform (125);
Einschrauben der Befestigungsschraubbolzen (120) in die Hülsen (116) derart, dass die Hülsen (16) mit dem Formenflansch (118) verschraubt sind; und
Fertigen des Flanschanschlusses (112), wobei die Hülsen (116) in einen Faserverbundwerkstoff eingebettet werden.

11. Verfahren zum Herstellen eines Flanschanschlusses (112) eines Windenergieanlagenrotorblatts (104), mit den Schritten:
Durchführen von Befestigungsschraubbolzen (120) verwendet nach einem der Ansprüche 1 bis 8 durch nebeneinander angeordnete Bohrungen (119) eines Formenflansches (118) einer Fertigungsform (125);
Einschrauben der Befestigungsschraubbolzen (120) in die Hülsen (116) derart, dass die Hülsen (116) mit der Flanschvorrichtung (118) verschraubt sind;
Fertigen eines Flanscheinlegers (113) mit dem Flanschanschluss (112), wobei die Hülsen (116) in einen Faserverbundwerkstoff des Flanscheinlegers (113) eingebettet werden.

12. Flanscheinleger (113) mit einem Flanschanschluss (112) für ein Windenergieanlagenrotorblatt (104), aufweisend mehrere nebeneinander angeordnete Hülsen (116), die in einem Faserverbundwerkstoff eingebettet sind, wobei der Flanscheinleger (113) gemäß einem Verfahren nach Anspruch 11 hergestellt ist.

13. Windenergieanlagenrotorblatt (104) aufweisend einen Flanschanschluss (112) mit mehreren, nebeneinander angeordneten Hülsen (116), wobei der Flanschanschluss (112) gemäß einem Verfahren nach einem der Ansprüche 10 oder 11 hergestellt ist.

14. Windenergieanlage (100), aufweisend einen Rotor (103) mit einem oder mehreren Rotorblättern (104) nach Anspruch 13.

## Claims

1. Fastening bolt (120) for the manufacturing of a flange connection (112) of a wind turbine rotor blade (104), the fastening bolt (120) being adapted to be screwed by means of an external thread (122) into a sleeve (116) of the flange connection (112) without lubrication, wherein the external thread (122) comprises a sliding material such that upon engagement with an internal thread of the sleeve (116), which comprises a steel material, emergency running properties are ensured, after which the fastening bolt (120) and the sleeve (116) can slide on each other without lubrication.

2. Fastening bolt (120) according to claim 1, wherein the fastening bolt (120) is manufactured in one piece and consists of the sliding material.

3. Fastening bolt (120) according to claim 1, wherein the sliding material is applied as a solid coating to the external thread (122) of the fastening bolt (120).

4. Fastening bolt (120) according to claim 1, wherein the sliding material is a solid lubricant and is embedded in a contact surface of the external thread (122).

5. Use according to claim 1 or 3 or 4, wherein the fastening bolt (120) is formed by a main bolt (121) and a threaded sleeve (123), the threaded sleeve (123) having the external thread (122) with the sliding material and being firmly connected to the main bolt (121).

6. Use according to claim 4, wherein the threaded sleeve (123) and the main bolt (121) are firmly connected via a left-hand thread.

7. Use according to claim 4 or 5, wherein the threaded sleeve (123) and the main bolt (121) are firmly connected by soldering, in particular cold soldering.

8. Use according to any one of the preceding claims, wherein the sliding material comprises or consists of one of the following materials:
bronze material, gunmetal material, PTFE, molybdenum disulphide or graphite.

9. System for manufacturing a flange connection (112) of a wind turbine rotor blade (104) comprising
a manufacturing mold (125) having a mold flange (118) with a plurality of juxtaposed boreholes (119),
a plurality of fastening bolts (120) used according to any one of the preceding claims; and
a plurality of sleeves (116),
wherein the fastening bolts (120) are insertable through the bores (119) and screwable into the sleeves (116) so that the sleeves (116) are screwable to the mold flange (118) .

10. Method of manufacturing a flange connection (112) of a wind turbine rotor blade (104), comprising the steps of:
passing fastening bolts (120) used according to any one of claims 1 to 8 through juxtaposed bores (119) of a mold flange (118) of a manufacturing mold (125),
screwing the fastening bolts (120) into the sleeves (116) such that the sleeves (16) are screwed to the mold flange (118); and
fabricating the flange connection (112), wherein the sleeves (116) are embedded in a fiber composite material.

11. Method of manufacturing a flange connection (112) of a wind turbine rotor blade (104), comprising the steps of:
passing fastening bolts (120) used according to any one of claims 1 to 8 through juxtaposed bores (119) of a mold flange (118) of a manufacturing mold (125),
screwing the fastening bolts (120) into the sleeves (116) such that the sleeves (116) are screwed to the mold flange device (118),
manufacturing a flange insert (113) comprising the flange connection (112), wherein the sleeves (116) are embedded in a fiber composite material of the flange insert (113).

12. Flange insert (113) having a flange connection (112) for a wind turbine rotor blade (104), comprising a plurality of juxtaposed sleeves (116) embedded in a fiber composite material, wherein the flange insert (113) is manufactured in accordance with a method of claim 11.

13. Wind turbine rotor blade (104) comprising a flange connection (112) having a plurality of sleeves (116) disposed side-by-side, wherein the flange connection (112) is manufactured in accordance with a method of claims 10 or 11.

14. A wind turbine (100) comprising a rotor (103) with one or more rotor blades (104) according to claim 13.

## Revendications

1. Utilisation d'un boulon fileté de fixation (120) pour la fabrication d'un raccord à bride (112) d'une pale de rotor d'éolienne (104), sachant que le boulon fileté de fixation (120) est vissé sans lubrification dans une douille (116) du raccord à bride (112) moyennant un filetage extérieur (122), sachant que le filetage extérieur (122) présente un matériau glissant tel qu'en cas de mise en prise dans un filetage intérieur de la douille (116), lequel présente un matériau en acier, des propriétés de marche de secours sont garanties selon lesquelles le boulon fileté de fixation (120) et la douille (116) peuvent glisser l'un sur l'autre sans lubrification.

2. Utilisation selon la revendication 1, sachant que le boulon fileté de fixation (120) est fabriqué d'une seule pièce et est composé du matériau glissant.

3. Utilisation selon la revendication 1, sachant que le matériau glissant est appliqué comme revêtement solide sur le filetage extérieur (122) du boulon fileté de fixation (120).

4. Utilisation selon la revendication 1, sachant que le matériau glissant est un lubrifiant solide et est logé dans une surface de contact du filetage extérieur (122).

5. Utilisation selon la revendication 1 ou 3 ou 4, sachant que le boulon fileté de fixation (120) est formé par un boulon principal (121) et une douille filetée (123), sachant que la douille filetée (123) présente le filetage extérieur (122) avec le matériau glissant et est fermement reliée au boulon principal (121).

6. Utilisation selon la revendication 4, sachant que la douille filetée (123) et le boulon principal (121) sont fermement reliés via un filetage à gauche.

7. Utilisation selon la revendication 4 ou 5, sachant que la douille filetée (123) et le boulon principal (121) sont fermement reliés par brasage, en particulier par brasage à froid.

8. Utilisation selon l'une des revendications précédentes, sachant que le matériau glissant présente ou est composé d'un des matériaux suivants :
matériau en bronze, matériau en fonte rouge, PTFE, disulfure de molybdène ou graphite.

9. Système de fabrication d'un raccord à bride (112) d'une pale de rotor d'éolienne (104), présentant
un moule de fabrication (125) pourvu d'une bride de moule (118) avec plusieurs alésages (119) disposés les uns à côtés des autres ;
plusieurs boulons filetés de fixation (120) utilisés selon l'une des revendications précédentes ; et
plusieurs douilles (116) ;
sachant que les boulons filetés de fixation (120) peuvent être guidés à travers les alésages (119) et vissés dans les douilles (116) de telle sorte que les douilles (116) soient vissables avec la bride de moule (118).

10. Procédé de fabrication d'un raccord à bride (112) d'une pale de rotor d'éolienne (104), comprenant les étapes de :
guidage de boulons filetés de fixation (120) utilisés selon l'une des revendications 1 à 8 à travers des alésages (119) disposés les uns à côté des autres d'une bride de moule (118) d'un moule de fabrication (125) ;
vissage des boulons filetés de fixation (120) dans les douilles (116) de telle manière que les douilles (116) soient assemblées par vissage à la bride de moule (118) ; et
fabrication du raccord à bride (112), sachant que les douilles (116) sont logées dans un matériau composite en fibres.

11. Procédé de fabrication d'un raccord à bride (112) d'une pale de rotor d'éolienne (104), comprenant les étapes de :
guidage de boulons filetés de fixation (120) utilisés selon l'une des revendications 1 à 8 à travers des alésages (119) disposés les uns à côté des autres d'une bride de moule (118) d'un moule de fabrication (125) ;
vissage des boulons filetés de fixation (120) dans les douilles (116) de telle manière que les douilles (116) soient assemblées par vissage à la bride de moule (118) ; et
fabrication d'un insert de bride (113) pourvu du raccord à bride (112), sachant que les douilles (116) sont logées dans un matériau composite en fibres de l'insert de bride (113) .

12. Insert de bride (113) pourvu d'un raccord à bride (112) pour une pale de rotor d'éolienne (104), présentant plusieurs douilles (116) disposées les unes à côté des autres, qui sont logées dans un matériau composite en fibres, sachant que l'insert de bride (113) est fabriqué suivant un procédé selon la revendication 11.

13. Pale de rotor d'éolienne (104) présentant un raccord à bride (112) avec plusieurs douilles (116) disposées les unes à côté des autres, sachant que le raccord à bride (112) est fabriqué suivant un procédé selon l'une des revendications 10 ou 11.

14. Éolienne (100), présentant
un rotor (103) pourvu d'une ou de plusieurs pales de rotor (104) selon la revendication 13.
